**Europäisches Patentamt**

**European Patent Office**

**Office européen des brevets**

(19)

(11) Publication number : **0 497 557 A2**

# (12) EUROPEAN PATENT APPLICATION

(21) Application number : **92300718.1**

(22) Date of filing : **28.01.92**

(51) Int. Cl.⁵ : **G11B 15/66,** G11B 15/32, G11B 23/113

(30) Priority : **31.01.91 US 648211**

(43) Date of publication of application :
**05.08.92 Bulletin 92/32**

(84) Designated Contracting States :
**DE GB NL**

(71) Applicant : **MINNESOTA MINING AND MANUFACTURING COMPANY**
3M Center, P.O. Box 33427
St. Paul, Minnesota 55133-3427 (US)

(72) Inventor : **Kline, Robert J., c/o Minnesota Mining and Mfg. Co**
2501 Hudson Road, P.O. Box 33427
St. Paul, Minnesota 55133-3427 (US)
Inventor : **Larsen, Thomas E., c/o Minnesota Mining and**
Mfg. Co. 2501 Hudson Road, P.O. Box 33427
St. Paul, Minnesota 55133-3427 (US)

(74) Representative : **Baillie, Iain Cameron et al**
Ladas & Parry Altheimer Eck 2
W-8000 München 2 (DE)

(54) **System for improving wound roll quality by electrostatically charging magnetic tape.**

(57)    A system for improving the quality of wound rolls (10) of magnetic tape (12) includes a roll (10) on which the tape (12) is wound and a charging apparatus which charges the tape (12). The charging apparatus applies an electrostatic charge onto the tape (12) to create an attractive force between the tape strands as they are brought together during winding to improve the alignment of the tape (12) on the roll (10) during high speed winding. The static charging does not significantly effect the tape performance. The charging apparatus includes at least one corona needle (28) press fit into a brass block (46), and an insulated supply cable (32) connected between the brass block (46) and a voltage source (30).

Fig 3

EP 0 497 557 A2

Jouve, 18, rue Saint-Denis, 75001 PARIS

## TECHNICAL FIELD

The present invention relates to systems for winding a web on a roll. More particularly, the present invention relates to systems for improving the winding of a magnetic tape on a tape reel.

## BACKGROUND OF THE INVENTION

The need for neat and uniform winding of rolls of magnetic recording tape is well known. U.S. Patent No. 4,909,455 (the '455 patent) describes the need for winding magnetic tape with succeeding strands of tape located in exact alignment over the preceding strands. Among the problems arising from failure to precisely align the tape are poor aesthetics, which can affect customer appeal, and damage to the edges of the tape, which can affect tape performance.

On known tape winding machinery, "scatter" or "popping" between the tape strands degrades the wind quality of the product. Scatter is believed to be caused by air entrained between the outer strands of the tape pack. When winding tension varies, this layer of entrained air is squeezed out of one side of the pack and carries the tape strand with it. As the tape winding speed increases, the layer of entrained air becomes thicker and it is easier for a strand to "pop" out of the tape pack. For this reason, some tape products can only be wound at relatively low speeds to maintain an acceptable wind quality level.

Several techniques are commonly used to minimize popped strands as tape is wound onto a roll. These techniques include using a high winding tension, high packroll force, or low winding speed; guiding the tape with a double-flanged packwheel; inserting strips of wiping fabric between the tape pack and flanges on the reel; and forcing the tape strand against a flange with air pressure or attraction by a strong magnetic field.

Though these techniques improve tape wind quality to varying degrees, they all suffer from undesirable side effects. Higher winding tension and higher packroll force increase hub impressions because of larger hoop and radial stresses in the wound roll. Low winding speeds decrease machine productivity and increase product cost.

Mechanical edge guides frequently damage the tape. In designs which use mechanical edge guides, a rubber-covered roll contacts the outer tape strand as a packroll to reduce entrained air and minimize telescoping of the roll. This is required to wind tape at relatively high production machine speeds (5 - 15 m/s). If the packroll has any wobble or eccentricity, or becomes glazed on the surface, the quality of wound rolls is seriously degraded. Some tape loading machines which use V-0 cassettes, such as the Otari VL-600, cannot use these devices because of space limitations.

Air pressure and magnetic forces do not yield consistent or acceptable winds for many tape products. The '455 patent discloses winding the tape in the presence of a magnetic field to create an attractive force between the tape being wound and the roll. However, magnets having sufficient power to be effective must be large, and must be placed near the roll of tape, creating severe space problems especially when tape is loaded into cassettes. The magnets must be placed on movable supports inside the cassette if they are to be sufficiently near to the roll to be effective. This is impractical, particularly when the tape is inserted into two-reel cassettes. These cassettes are assembled by inserting the reels into the cassette with only the leader portion of the tape running from the supply reel to the takeup reel, cutting the leader to form a supply reel leader and a takeup reel leader, and then attaching the recording portion of the tape between the two leaders. The magnetic force would need to be exerted into the cassette as the tape is wound. Accomplishing this would unduly complicate and increase the cost of the cassette.

Electrostatic forces have been used to improve the winding of thin webs onto a roll, as described in U.S. Patent No. 4,683,093 to Hagiwara et al. Hagiwara discloses establishing a high potential difference between two nip rollers to hold a moving polymeric film on a roll without slipping. There is no discussion of using this system with magnetic tapes.

In Japanese patent applications JP 58-132521 and 51-071352, and British patent application 1,500,829, all assigned to Teijin K.K., the winding of wide rolls of polymeric film is improved by applying an electrostatic charge to a narrow region near one edge of the roll. Electrically insulating films must be used to prevent the applied charge from dissipating until the strand of film has been wound onto the roll. As the charges do not neutralize they must be bled off to prevent build-up. This system can only charge intermittently or in a narrow band unless a static eliminator controls charge build-up on the web. There is no disclosure of how charging films on which magnetic coatings are applied can be accomplished without the retained static charge impairing the recording quality or damaging the recording equipment.

Surfaces having antistatic treatments, such as magnetic recording media, have surface resistivities in the range of about $10^3$ to $10^{10}$ ohms per square. These antistatic surfaces can dissipate charge quicker than untreated surfaces which can have surface resistivities exceeding $10^{15}$ ohms per square. One example of an antistatic surface is described in U.S. Patent No. 3,881,046, which discloses a coating, having a surface resistivity of $10^9$ ohms per square, on the back (nonmagnetic) side of a recording tape. This patent indicates that electrically charged tape can attract dust and impede performance.

U.S. Patent No. 3,892,614 shows individual sheets of material being adhered to flat surfaces by electrostatic charge. However, this system does not disclose the effect of the static attraction on the alignment of rolls of long, thin webs which are wound and unwound repeatedly. Nor does it discuss that electrostatic charges can be used with magnetic tapes.

It is commonly known that electrostatic charging is to be avoided when magnetic media are involved. U.S. Patent No. 4,712,148 notes that static charge on the tape can cause tape to stick to the tape guides and cause irregular tape transport (col. 1, lines 22-30). Likewise, U.S. Patent No. 4,570,197, issued to Minnesota Mining and Manufacturing Company, discusses at col. 2, lines 3-13 the harmful effects which arise due to dust being attracted to the tape and cassette by static charge build-up.

In light of the many problems caused by static charge on magnetic media, it would seem unwise to deliberately add electrostatic charge to such materials. Furthermore, if antistatic surface treatments were applied in amounts sufficient to be effective, it would seem that the charge would be dissipated as quickly as it is applied, thereby defeating any beneficial effects. Additionally, regarding the effect of air entrainment, U.S. Patent No. 4,789,110 describes a method for deliberately entraining air between portions of magnetic tape to improve tape alignment.

SUMMARY OF THE INVENTION

Electrostatically charging the tape eliminates popped strands as the tape is wound onto a roll and yields a significantly larger process window in which to wind. Higher winding speed, lower packroll force or no packroll, and lower winding tension are possible using electrostatic charging. Charging the tape strand can be accomplished by a wind of ionized air, a conductive roller, or preferably a noncontacting electrode. A high winding speed compensates for the reduced charge retention time which results from reduced surface resistivity. Thus, electrostatic charging of magnetic tape can improve the alignment of successive tape strands on the roll without causing the problems normally associated with static build-up on magnetic media.

The apparatus for improving the wind quality of rolls of antistatic magnetic recording tape includes a roll on which the tape is wound, a grounded backup roller which electrically grounds the tape, and a charging electrode. The charging electrode charges the tape without contacting the tape as the tape passes over the backup roller. The backup roller can include grooves which vent any air film created between the web and the backup roller. The charging electrode applies an electrostatic charge onto the tape to create an attractive force between adjacent surfaces of the tape as they are brought together during winding. This causes the adjacent surfaces of the tape to electrostatically adhere to each other and remain in alignment on the tape rolls during high speed winding without adversely affecting the tape performance.

The charging electrode is a corona needle and is part of a system which includes a plurality of corona needles press fit into a brass block. An insulated supply cable is connected to the brass block and connects the corona needles to a voltage source. The brass block and insulated supply cable are embedded in an insulated block, and a metal tube surrounds the insulated block and the corona needles.

BRIEF DESCRIPTION OF THE DRAWINGS

Figure 1 is a perspective view of a wound tape roll.

Figure 2 is a schematic view of a system for electrostatically charging and winding a roll of magnetic tape.

Figure 3 is an enlarged schematic view of the system of Figure 2.

Figure 4 is a cross-sectional view of the corona apparatus used in the system of Figure 2.

Figure 5 is a schematic view of a tape winding apparatus using the system of Figure 2.

Figure 6 is a schematic view of a commercial video tape winding apparatus using the system of Figure 2.

Figures 7A, 7B, and 7C are schematic views of alternative embodiments of the charging system of the present invention.

DETAILED DESCRIPTION OF PREFERRED EMBODIMENTS

The wind quality describes how well the strands of tape on a roll are aligned relative to each other. The present invention is a simple, reliable, low cost system which electrostatically charges magnetic recording tape to improve wind quality during high speed tape winding. The invention is intended to be used primarily with antistatic magnetic recording tape, having surface resistivities from $10^3$ to $10^{10}$ ohms per square, although it can be used with tapes having surface resistivities of from $10^{10}$ to $10^{13}$ ohms per square. ("Antistatic" describes a surface which has less surface resistivity than an electrical insulator. Surfaces with surface resistivities in the range of $10^3$ to $10^{10}$ ohms per square have good or excellent antistatic protection.) Surprisingly, even when the charge dissipates completely in 2-3 minutes, due to the antistatic nature of the tape, the charge on the tape improves the wind quality. Also, higher winding speeds improve productivity and yield neatly wound rolls with electrostatic charging. The invention can be used with all kinds of magnetic recording tape including video, audio, and data storage tape.

Wind quality at high winding speeds is generally poor largely because air is entrained between the strands of tape by the high speed movement of the tape on the roll. The entrained air causes the tape strands to "float" out of contact with each other on the roll where they are easily moved laterally by any small force. This type of poor wind quality is known as "scatterwind," defined in Jorgensen's The Complete Handbook Of Magnetic Recording (1988) as "lateral displacements of tape wound on a reel which gives an irregular appearance to the side surfaces of a tape pack. Scatterwind can result from such things as poorly controlled tape tension, guiding, static electrical charge, and poor tape slitting." Although this definition lists static electrical charge as a cause of scatterwind, this invention uses static charge to reduce scatterwind.

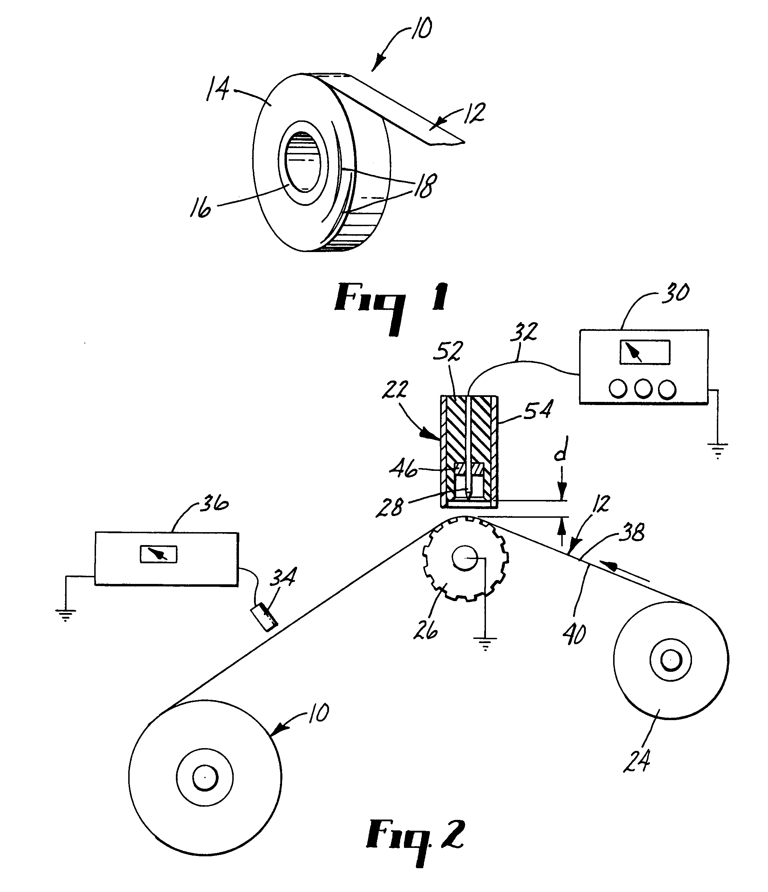

Referring to Figure 1, wind quality can be judged by looking at the sides 14 of a roll 10 of tape 12, which has been wound on a hub 16. The misalignment of the tape 12 which causes the edges 18 of some strands of tape 12 to be outside of the plane of the side 14 indicates poor wind quality. Placing opposing electrostatic charges on each side of the tape improves wind quality by creating an attractive force between the strands as they are brought together during winding. This force removes most of the air between the tape strands as they contact each other so that one strand cannot move laterally relative to another. This is achieved with the charging and winding system 20.

The system 20 includes an electrostatic tape charging apparatus 22. Preferably, the charging apparatus 22 is a noncontact electrode system, such as the corona apparatus shown in Figures 2 - 6. Alternatively, a conductive roller, a conductive brush, or other charging configurations can be used. It is preferred to use a noncontacting system in which only ionized air contacts the tape 12 to minimize potential harm to the tape 12.

The configuration of the electrostatic tape charging apparatus 22 depends upon whether both sides of the tape 12 are antistatic. When both sides of the tape are antistatic, a single charging apparatus 22 can be used. The position of the charging electrode with respect to a grounded backup roller is not critical because induced charges from the roller can migrate quickly and easily to the vicinity of the electrode. However, when the backside coating is very resistive this charge migration is difficult and may take a long time. Under these circumstances, the charging electrode must be placed opposite and in close proximity to the backup roller to charge the backside.

When only the magnetic side of the tape is antistatic, it is difficult to induce a uniform, opposite charge on the uncoated surface of the tape simply by inducing a charge on the coated surface. This is because the uncoated tape surface contacts the backup roller at only a few points along the line of contact. Charge that builds up at those contact points remains there because the tape surface is an electrical insulator and is too resistive to permit charge movement across the surface. Tape surfaces with high surface resistivity can be charged by induction if their surface makes intimate contact with the ground plane on a microscopic level. Intimate contact can be achieved with an oppositely-charged apparatus 22 which creates an oppositely-charged ground plane on the back side of the tape. As with the charging apparatus on the antistatic side of the tape, this can be accomplished with roughened metallic rollers, a brush with electrically conductive fibers, or an electrode device.

A roughened roller having a large number of small surface points inductively develops a charge opposite to that on the other side of the tape. Each point contacts and transfers charge to the tape surface to produce a high average macroscopic charge level. A conductive brush placed opposite the charging apparatus contacts and charges the uncoated tape surface. The edges of the brush fibers generate high electric fields to ionize the surrounding air and assist the charge transfer. The fibers are small, densely packed, and resilient to independently contact the tape surface. An electrode charging apparatus of opposite polarity to that on the antistatic side is preferred as it bombards the entire insulator tape surface with ions without contacting the tape. Compressed air can be used to drive charged ions against the insulator surface as long as lateral, uncontrollable tape movement is prevented.

The charges on the insulated side do not impede charge neutralization in the wound roll of tape. As the strands of tape are brought into intimate contact, the charges on the antistatic side align themselves with the opposite charges on the insulated side and neutralize the charged insulator sites within a short period of time. The charges on the insulated side can be neutralized faster with lower resistivity antistatic surfaces.

In Figure 2, the tape 12, which is antistatic on both sides, is obtained from a tape source 24. The tape source 24 can be a slitter which cuts the tape from a wider stockroll, a slitroll or pancake of previously slit tape, or a splicer. As the tape 12 passes over an electrically grounded metal backup roller 26, it is charged by the charging apparatus 22. In the embodiments of Figures 2 - 6, the charging apparatus is a noncontact electrode system. In this system, the electrodes are corona needles 28, which are connected to a high voltage power supply 30 through a high voltage supply cable 32. Although Figures 2 and 3 show only a single needle 28, at higher tape speeds several needles 28 connected in parallel to a power supply 30 apply a higher charging current to the tape 12 without increasing the voltage to unacceptable levels.

After the tape 12 is charged, it is wound onto the roll 10 as shown in Figure 2. As both surfaces of the tape 14 have surface resistivities in a range about $10^3$

to $10^9$ ohms per square in the illustrated embodiment, the charge applied to the needles 28 is conducted away, along the tape 12, so that even if the electrostatic potential is measured a short distance downstream from the needles 28 by an electrostatic field sensor 34 connected to an electrostatic voltmeter 36, the potential at that point is reduced. By running the tape 12 at a sufficient speed, over 1 m/s, the amount of charge present on the tape 12 as it is wound onto the roll 10 is adequate to improve the wind quality of the tape 12 to an acceptable level.

Figure 3 is an enlarged view of the charging system 22. A high negative voltage is applied to the needles 28 to ionize the air in the region of the needles 28. The negative ions created are driven to the upper surface 38 of the tape 12. The the lower surface 40 of the tape 12, a nonrecording backside, is less resistive than the upper surface 38 and contacts the roller 26. As the negative ions on the surface 38 tend to repel negative charges on the lower surface 40, there is a net flow on the roller 26 of negative charge away from the surface 40 of the tape 12 to ground and a similar net flow of positive charge toward the surface of the roller 26. When the tape 12 breaks away from the roller 26, which occurs at the separation point 42 in Figure 3, the surface 40 of the tape 12 is charged positively. Since the sides 38 and 40 of the tape 12 are oppositely charged, the intimate electrical contact between the sides 38 and 40 of adjacent tape strands during winding tends to neutralize any net charge which may remain on the tape 12. Alternatively, a similar result, with opposite polarities, occurs if a positive voltage is applied to the needles 28.

Because the base film of the tape is essentially an electrical insulator, the opposing electrostatic charges cannot migrate toward and neutralize each other through the tape strand. As the inner surface of a charged strand approaches the oppositely charged outer strand of the tape pack, it is pulled into intimate contact with the pack with enough force to prevent lateral movement between the tape strands. This attractive force can be controlled by the amount of charge placed on the tape strand.

Negative or positive charging voltages in the range of 5000 to 15,000 volts can be used and the preferred range is 6000 to 8000 volts at winding speeds of 3 - 12 m/s. Negative voltages are preferred because they are easier to generate and control. The specific voltage which provides optimum results is primarily a function of the number of needles 28, the distance d of the needles 28 from the tape surface being charged, and the speed of the tape 12. Less than 4000 volts does not produce significant beneficial effects, and more that 10,000 volts sometimes arcs to the roller 26 and damages the tape 12.

Electrical contact between the backside 40 of the tape 12 and the roller 26 is improved, especially at high tape speeds, if the air film is vented, such as with grooves 44. Preferably the grooves 44 are perpendicular to the direction of rotation of the roller 26, as shown in Figure 3. Making the edges of the grooves 44 as sharp as possible without damaging the tape 12 further enhances conduction of charge from the lower side 40 of the tape 12 to the roller 26.

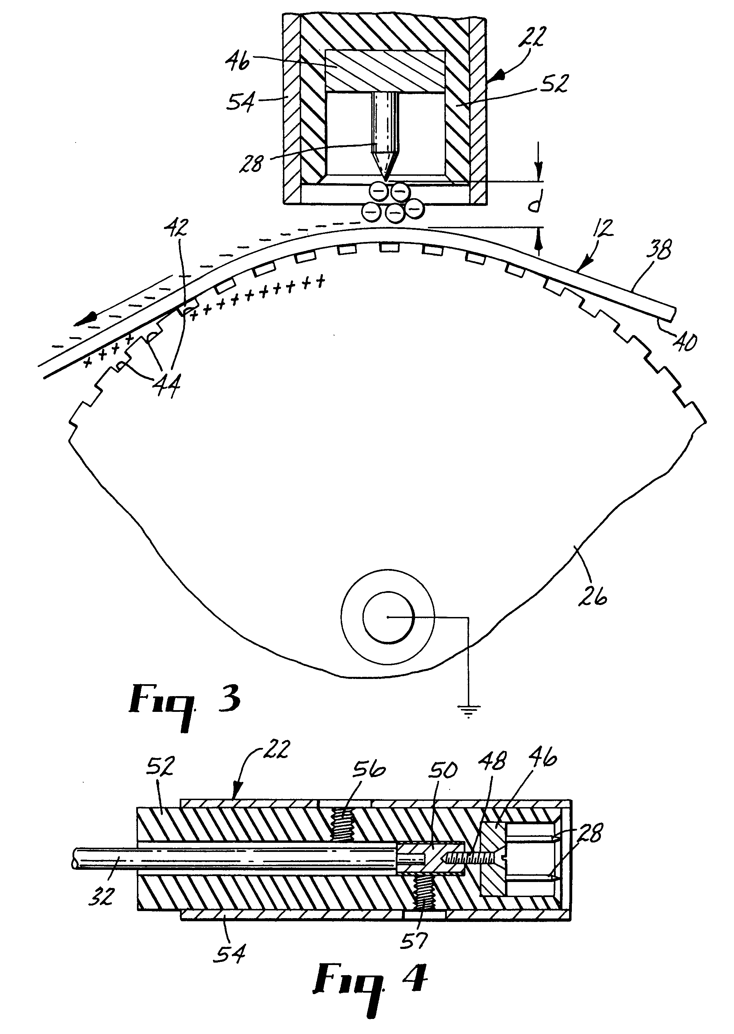

Figure 4 shows the charging apparatus 22 in detail. Two needles 28 are press fit into an electrically conducting block preferably made from a noncorrosive metal such as brass. The brass block 46 is connected to the supply cable 32 via a screw 48 and a connector 50. The needles 28 can be commercially available needles commonly uses as static removal probes for commercial film handling. The cable 32, brass block 46, screw 48, and connector 50 are embedded in an insulated block 52, which can be made of any durable insulating material having sufficient dielectric strength to withstand high voltage, and which can be fabricated into the desired shape. The insulated block 52 is surrounded by a metal tube 54, which is electrically grounded to minimize shock hazard and to stabilize the emission of the charging apparatus 22. The insulated block 52 can be held into the tube 54 by a set screw (not shown) in a tapped hole 56 while the connector 50 is soldered onto the cable 32 and is held in place by a plastic set screw (not shown) in a tapped hole 57. The insulated block 52 serves as a shield to prevent shock to the operator.

It is sometimes desirable to use more than two charging needles 28. While the distance between the charging needles 28 is not critical, it is preferred that all of the needles 28 be within an area delineated by the parallel edges of the tape 12 to avoid arcing of the needles 28 to the roller 26, to the grounded metal tube 54, or to other grounded points. This location is preferably near the center of the tape 12 with a gap between the needles 28 and the tape 12 greater than the gap between the needles 28 and their the metal tube 54. Additionally, a portion of the insulated block 52 extends beyond the tips of the needles 28 to help reduce arcing between the needles 28 and the grounded metal tube 54.

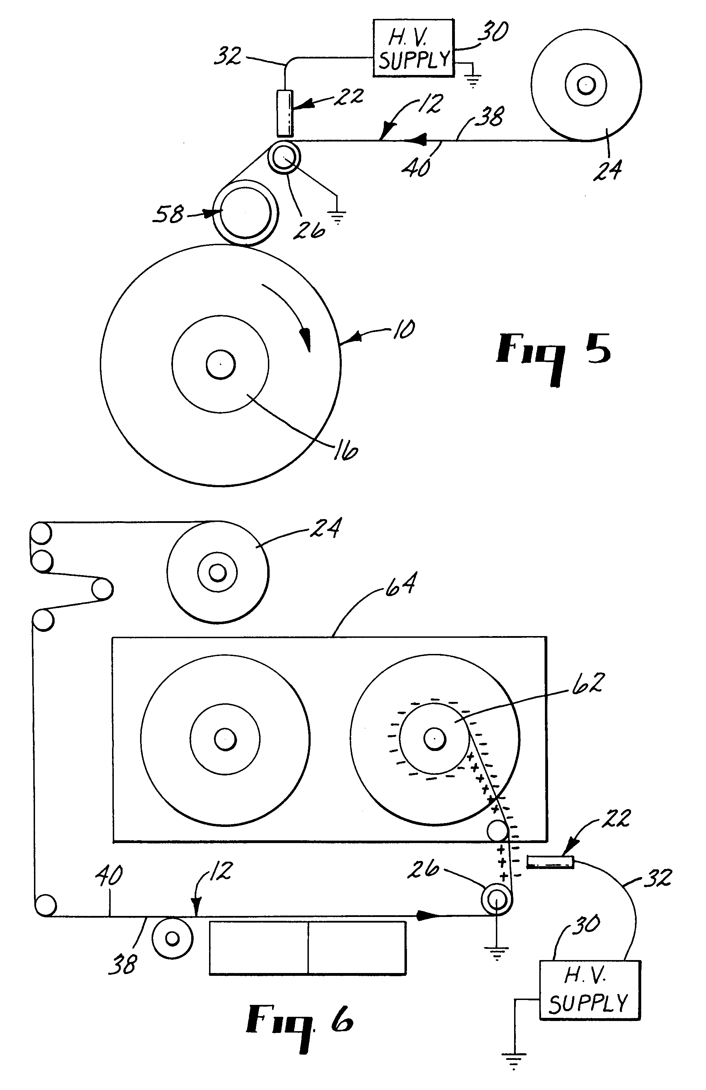

The winding apparatus shown in Figure 5 is used to wind video recording tape 12 from a tape source 24, such as a stockroll, onto a hub 16 of the type commonly used for standard videotape pancakes. After the tape 12 is unwound from the stockroll it is slit by a slitter (not shown) before being electrostatically treated. The surface resistivity of the magnetic recording side 38 of the tape 12 is $10^9$ ohms per square, and the surface resistivity of the nonrecording side 40 is $10^3$ ohms per square. The tape width is 12.7 mm, and the nominal tape thickness is 20 m. The winding is performed at a surface speed of 7.5 m/s. A torque is applied to the stockroll to control tape tension. This torque is reduced as the tape 12 is wound onto the pancake roll 10 to decrease the tape winding tension from 120 g to 77 g, and avoid damaging the inner strands of the tape 12 near the hub 16. The recording side 38 of the tape 12 is charged by the charging apparatus 22, which uses four needles 28, spaced 13 mm from the surface of the tape 12.

A roller 58, which rests on the outer surface of the roll 10 with a force of 13.34 N is mounted between the grounded roller 26 and the charging apparatus 22. The roller 58 is an aluminum wheel having an elastomeric tire attached to its periphery, and can be used as a packroll to force entrapped air from rolls of magnetic tape. The wind quality improves with or without the roller 58 contacting the surface of the roll 10 as a packroll. However, wind quality is improved more with no packroll contact when the tape 12 is electrostatically charged. If the roller 58 is used as a packroll in conjunction with electrostatic charging, the roller 58 can be configured, by threading the tape 12 differently, to contact the tape 12 on the roll 10 after the tape has wound around the roll more than 180°.

A voltage of -10,000 volts supplied to the charging apparatus produces excellent wind quality, with the sides of roll 10 being very smooth and without any of the visible circular rings commonly encountered when wind quality is poor. When the power supply 30 is turned off, and the other winding conditions are held constant, the wind quality quickly deteriorates and does not improve until power returns.

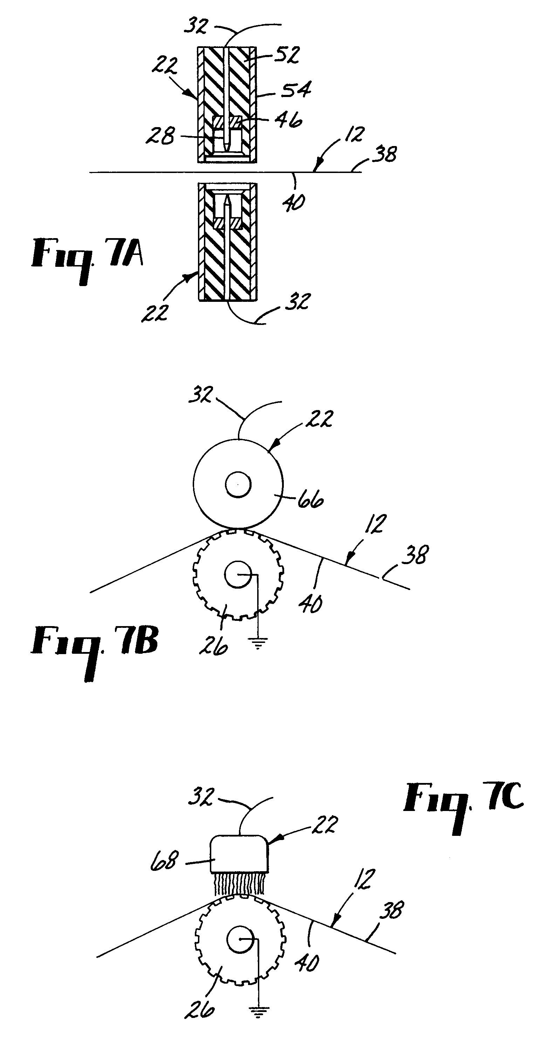

The charging and winding system 20 also can be used with an Otari VL-600 cassette loading machine 60 which has the tape path shown in Figure 6. The loading machine 60 is used to wind VHS video recording tape 12 onto the supply reel 62 of a cassette 64 from a tape source 24 such as the pancake roll 10 of Figure 5. The winding is performed at a tape speed of 11 m/s, which is the standard production speed for the Otari VL-600, and the tape tension maintained at 55 grams. The charging apparatus 22 uses six needles 28 and voltages between -8,000 and -10,000 volts to improve wind quality. The needles 28 are located slightly above, rather than directly opposite, the grounded roller 26, due to space constraints. This does not impair the effectiveness of the charging apparatus 22 in improving wind quality. Like the system of Figure 5, when the power supply 30 is turned off, and the other winding conditions are held constant, the wind quality quickly deteriorates and does not improve until power returns.

Figure 7A illustrates a modified version of the system 20 of the invention for use on tape when only the magnetic side of the tape is antistatic. A second, oppositely-charged apparatus 22 replaces the roller 26 and creates an oppositely-charged ground plane on the back side of the tape 12 to enable the tape to be properly charged. Figure 7B is a modified version of the system 20 in which the charging apparatus 22 is a conductive roller 66, and Figure 7C is a modified version of the system 20 in which the charging apparatus 22 is a conductive brush 68.

The relative improvement in cassette wind quality when tape charging according to the present invention is used with various systems, as compared to when it is not used reveals that when the tape is charged 98% of the cassettes have good winds whereas uncharged tape yields only 20% of cassettes with good winds.

A common concern with magnetic recording is that dust on the surface of the tape reduces quality, and static charges tend to attract dust. This problem is overcome by winding the tape 12 in a clean environment, by positioning the charging apparatus 22 very close to the wind-up roll 10, and by winding at a relatively high speed. This minimizes the time for dust to collect, and the speed creates a layer of high velocity air next to the tape surface which blows away any dust particles in the area.

The normal static build-up problem in tape is overcome by having antistatic coatings of sufficient resistivity to bleed off or neutralize the applied charge within seconds or at most a couple of minutes. Charge does not build up on the tape roll since the charges are free to move around and neutralize each other. This charging and winding system 20 winds and charges continuously over the whole area of the tape 12 without a static eliminator. Additionally, because the invention uses an antistatic backside coating which can draw and distribute charges quickly from the ground plane, it is more efficient at charging, it can wind at much higher speeds, and for a given speed it can use lower voltage charging electrodes than known systems. The present invention relies both on the electrostatic adhesion of surfaces and that attraction on the alignment of rolls of tape, which are wound and unwound repeatedly.

An important part of this system 20 is that the static charging does not significantly effect the tape performance as indicated by dropout count, fast forward and rewind speeds, durability, and head wear. The dropout count is the number of dropouts in a length of magnetic tape. Since dust on the tape causes dropouts, and since charging the tape might attract dust to the tape, the dropout count indicates whether dust has become attracted to the tape due to charging. Also, adding static charge might increase the static cling of the tape to itself, thereby increasing drag or reducing tape speed during rewind and fast forward. Tests of these performance characteristics indicates that the dropout counts, fast forward and rewind times, durability, and head wear of tapes treated by the charging apparatus 22 are not significantly different from those of untreated tapes.

## Claims

1. An apparatus for improving the wind quality of rolls (10) of magnetic recording tape (12), wherein the tape (12) has two major surfaces, the apparatus comprising:

a roll (10) on which the tape (12) is wound;

means (26) for electrically grounding at least one side of the tape;

a backup roller around which the tape (12) passes; and

means (22) for charging the tape (12) as it passes over the backup roller, wherein the charging means (22) applies an electrostatic charge onto the tape (12) to create an attractive force between adjacent surfaces of the tape (12) as they are brought together during winding to cause the adjacent surfaces to be electrostatically adhered to each other and to hold them in alignment on the tape rolls (10) during high speed winding without significantly affecting the performance of the tape (12).

2. The apparatus of claim 1 wherein the charging means (22) comprises at least one conductive roller (66) connected to a voltage source (30).

3. The apparatus of claim 1 wherein the charging means (22) comprises at least one conductive brush (68) connected to a voltage source (30).

4. The apparatus of claim 1 wherein the charging means (22) comprises at least one electrode (28) connected to a voltage source (30).

5. The apparatus of claim 4 wherein a plurality of electrodes (28) are used and wherein the charging means (22) further comprises:

an electrically conducting block (46) in which the electrodes (28) are press fit; and

an insulated supply cable (32) connected to the electrically conducting block (46).

6. The apparatus of claim 5 wherein the charging means (22) further comprises:

an insulating block (52) wherein the electrically conducting block (46) and insulated supply cable (32) are embedded in the insulating block (52); and

a metal tube (54) surrounding the insulating block (52) and the electrodes (28).

7. The apparatus of claim 1 wherein the grounding means comprises a grounded backup roller (26).

8. The apparatus of claim 1 wherein the backup roller (26) comprises means for venting any air film created between the tape and the backup roller.

9. The apparatus of claim 8 wherein the venting means comprises grooves (44).

10. The apparatus of claim 1 wherein at least one major surface of the tape (12) is antistatic and has a surface resistivity of no more than $10^{10}$ ohms per square.

11. An apparatus for improving the wind quality of rolls (10) of magnetic recording tape (12), wherein the tape (12) has two major surfaces, the apparatus comprising:

a roll (10) on which the tape (12) is wound;

a backup roller around which the tape (12) passes; and

means (22) for charging the tape as it passes over the backup roller, wherein the charging means (22) applies a charged electrostatic charge onto one surface of the tape (12) and an oppositely charged electrostatic charge onto the other surface of the tape (12) to create an attractive force between adjacent surfaces of the tape (12) as they are brought together during winding to cause the adjacent surfaces to be electrostatically adhered to each other and to hold them in alignment on the tape rolls (10) during high speed winding without significantly affecting the performance of the tape (12).

12. A method of improving the wind quality of rolls (10) of magnetic recording tape (12), wherein the tape (12) has two major surfaces, the method comprising the steps of:

electrically grounding the tape (12);

winding the tape (12) at high speed onto a roll (10);

applying an electrostatic charge to the grounded tape (12) immediately prior to winding the tape (12) onto its roll (10) to create an attractive force between adjacent surfaces of the tape (12) as they are brought together during winding to cause the adjacent surfaces to be electrostatically adhered to each other and held in alignment on the tape rolls (10) during high speed winding without significantly affecting the performance of the tape (12); and

selecting a speed of winding sufficient to wind the tape (12) onto the roll before dissipation of the electric charge.

13. The method of claim 12 wherein the applying a charge step comprises using at least one electrode (28).

14. The method of claim 12 wherein at least one major surface of the tape (12) is antistatic and has a surface resistivity of no more than $10^{10}$ ohms per square.

Fig 1

Fig. 2

Fig. 3

Fig. 4

Fig 5

Fig. 6

Fig. 7A

Fig. 7B

Fig. 7C